(19) Europäisches Patentamt / European Patent Office / Office européen des brevets

(11) EP 3 570 246 A1

(12) **EUROPEAN PATENT APPLICATION**
published in accordance with Art. 153(4) EPC

(43) Date of publication:
20.11.2019 Bulletin 2019/47

(51) Int Cl.:
*G06Q 50/02* (2012.01)      *A01G 7/00* (2006.01)

(21) Application number: 17891930.4

(22) Date of filing: 27.12.2017

(86) International application number:
PCT/JP2017/046827

(87) International publication number:
WO 2018/131480 (19.07.2018 Gazette 2018/29)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
MA MD TN

(30) Priority: 10.01.2017  JP 2017001790

(71) Applicant: NEC Corporation
Tokyo 108-8001 (JP)

(72) Inventors:
• FUJIYAMA, Kenichiro
  Tokyo 108-8001 (JP)
• ARAKI, Soichiro
  Tokyo 108-8001 (JP)
• SATOH, Mineto
  Tokyo 108-8001 (JP)
• AZUMA, Tan
  Tokyo 108-8001 (JP)

(74) Representative: Vossius & Partner
Patentanwälte Rechtsanwälte mbB
Siebertstrasse 3
81675 München (DE)

(54) **INFORMATION PROCESSING DEVICE, INFORMATION PROCESSING METHOD, AND RECORDING MEDIUM ON WHICH INFORMATION PROCESSING PROGRAM IS RECORDED**

(57) Provided are an information processing apparatus and the like with which a process for raising agricultural products can be evaluated accurately. The information processing apparatus 401 has: a calculation unit 402 which, on the basis of agricultural information pertaining to agricultural work performed in a process in which a subject crop is cultivated in a subject agricultural field, calculates an intake resource amount indicating an amount that can be taken in by the subject crop when cultivated according to the agricultural information; and an information creation unit 403 which, on the basis of the intake resource amount and a necessary resource amount required for growing the subject crop, creates risk information indicating a degree of risk that the yield of the subject crop will be reduced.

Fig.1

EP 3 570 246 A1

**Description**

[Technical Field]

The present invention relates to an information processing apparatus and the like that evaluates quality of agricultural work.

[Background Art]

Agricultural insurance is insurance for a person engaging in agriculture, and is insurance for compensating an income decrease due to a decrease in yield, when a yield of a target crop is decreased due to unusual weather, inappropriate farming, or the like.
An insurance company provides agricultural insurance, while paying attention to the following points.

◦ Designing Plan called Agricultural insurance:

An insurance company estimates in advance, regarding a crop being a target for agricultural insurance (hereinafter, referred to as a "target crop") and the like, a risk degree of a yield decrease of the target crop, and sets an insurance fee that matches the estimated risk degree.

◦ Selling Agricultural insurance:

The insurance company sells agricultural insurance to a person engaging in agriculture. Specifically, the insurance company makes an insurance contract with the person engaging in agriculture and collects an insurance fee relating to the agricultural insurance from the person engaging in agriculture. The insurance is for compensating (paying insurance money) for an income decrease via the agricultural insurance, when the income decrease relating to the target crop occurs.

◦ Managing Insurance Fee:

The insurance company prepares for payment of insurance money by managing the insurance fee collected from the person engaging in agriculture.

◦ Investigating Degree of Damage Occurred Relating to Target crop:

When a yield of the target crop is decreased, the insurance company investigates damage accompanied by the yield decrease, and calculates insurance money to be paid to the person engaging in agriculture, based on an investigation result.

◦ Paying Insurance Money:

The insurance company pays the calculated insurance money to the person engaging in agriculture.
Among these, designing a plan relating to agricultural insurance is most important to an insurance company. A reason for this is that profits of an insurance company increase or decrease depending on designing a plan relating to agricultural insurance. For example, when an insurance fee is low, since an expense for insurance money is high, as compared with an insurance fee income, profits acquired by subtracting the insurance money expense from the insurance fee income decrease. Further, when an insurance fee is high, a person engaging in agriculture hesitates to purchase agricultural insurance and thereby the profits decrease.
Therefore, in designing a plan relating to agricultural insurance, it is necessary to accurately estimate a risk of a yield decrease of a target crop, and appropriately set an insurance fee that matches the estimated risk. In this case, a risk of a yield decrease of the target crop is estimated, based on statistical information such as a history relating to a yield of the target crop.
An example of a system relating to agricultural insurance is, for example, disclosed in PTL 4. PTL 4 discloses a system for generating an insurance policy relating to a crop. The system generates a model indicating relevance between a crop and weather, and generates an insurance policy, based on the generated model.
An example of a system for calculating an insurance fee is disclosed in PTLs 1 to 3.
PTL 1 discloses an automobile monitoring system for determining an insurance fee. The automobile monitoring system determines an insurance fee relating to an automobile, based on data indicating driving characteristics of a driver who drives the automobile.

PTL 2 discloses a calculation system for calculating an insurance fee relating to a vehicle. The calculation system calculates an insurance fee relating to a vehicle, based on data indicating a use state of the vehicle and data relating to maintenance or management of the vehicle.

PTL 3 discloses an information processing apparatus for calculating an insurance fee relating to a moving body such as an automobile. The information processing apparatus calculates an insurance fee relating to a moving body, based on data indicating a specific behavior relating to the moving body.

[Citation List]

[Patent Literature]

PTL 1: Japanese Unexamined Patent Application Publication No. 1999(H11)-511581
PTL 2: Japanese Unexamined Patent Application Publication No. 2002-259708
PTL 3: Japanese Unexamined Patent Application Publication No. 2015-225498
PTL 4: US patent application publication No. 2013/0332205

[Summary of Invention]

[Technical Problem]

However, even when any of the systems (or apparatuses) disclosed in PTLs 1 to 3 is employed, it is difficult to calculate an insurance fee relating to agricultural insurance. A reason for this is that a content (type) of risk in a case where a target of insurance is a crop is totally different from a content of risk in a case where a target of insurance is an automobile.

Further, even when the system disclosed in PTL 4 is employed, it is not always a case that insurance relating to a crop can be appropriately designed. A reason for this is that, despite that a yield of a crop is related to a cultivation process of the crop, the cultivation process is not reflected in an insurance policy to be calculated and generated by the system.

In view of the above, one of objects of the present invention is to provide an information processing apparatus and the like capable of accurately evaluating a process of growing a crop.

[Solution to Problem]

As an aspect of the present invention, an information processing apparatus includes:

calculation means for calculating ingestion resource volume based on farming information regarding to farming work in a process of cultivating a target crop in a target field, the ingestion resource volume representing ingestible volume of the target crop cultivated along the farming information; and
information generation means for generating risk information representing a risk degree of yield decrease of the target crop based on necessary resource volume required for growing the target crop and the ingestion resource volume.

In addition, as another aspect of the present invention, an information processing method includes:

calculating ingestion resource volume based on farming information regarding to farming work in a process of cultivating a target crop in a target field, the ingestion resource volume representing ingestible volume of the target crop cultivated along the farming information; and
generating risk information representing a risk degree of yield decrease of the target crop based on necessary resource volume required for growing the target crop and the ingestion resource volume.

In addition, as another aspect of the present invention, an information processing program includes:

a calculation function for calculating ingestion resource volume based on farming information regarding to farming work in a process of cultivating a target crop in a target field, the ingestion resource volume representing ingestible volume of the target crop cultivated along the farming information; and
an information generation function for generating risk information representing a risk degree of yield decrease of the target crop based on necessary resource volume required for growing the target crop and the ingestion resource volume.

Furthermore, the object is also achieved by a computer-readable recording medium that records the program.

[Advantageous effects of Invention]

An information processing apparatus and the like according to the present invention is able to accurately evaluate a process of growing a crop.

[Brief Description of Drawings]

[Fig. 1] Fig. 1 is a block diagram illustrating a configuration of an information processing apparatus according to a first example embodiment of the present invention.
[Fig. 2] Fig. 2 is a flowchart illustrating a flow of processing in the information processing apparatus according to the first example embodiment.
[Fig. 3] Fig. 3 is a block diagram illustrating a configuration of an information processing apparatus according to a second example embodiment of the present invention.
[Fig. 4] Fig. 4 is a flowchart illustrating a flow of processing in the information processing apparatus according to the second example embodiment.
[Fig. 5] Fig. 5 is a block diagram illustrating a configuration of an information processing apparatus according to a third example embodiment of the present invention.
[Fig. 6] Fig. 6 is a flowchart illustrating a flow of processing in the information processing apparatus according to the third example embodiment.
[Fig. 7] Fig. 7 is a block diagram illustrating a configuration of an information processing apparatus according to a fourth example embodiment of the present invention.
[Fig. 8] Fig. 8 is a flowchart illustrating a flow of processing in the information processing apparatus according to the fourth example embodiment.
[Fig. 9] Fig. 9 is a block diagram schematically illustrating a hardware configuration of a calculation processing apparatus capable of achieving information processing apparatus according to each example embodiment of the present invention.

[Example Embodiment]

Next, example embodiment of the present invention will be described in reference to drawings.

<First example embodiment>

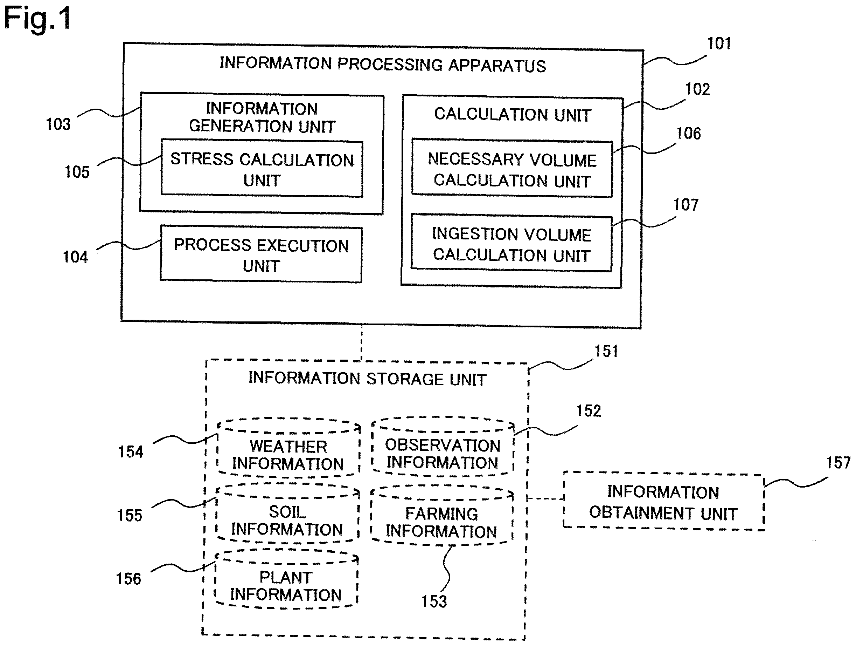

A configuration of an information processing apparatus 101 according to a first example embodiment of the present invention will be described in detail with reference to Fig. 1. Fig. 1 is a block diagram illustrating a configuration of the information processing apparatus 101 according to the first example embodiment of the present invention.

The information processing apparatus 101 according to the first example embodiment of the present invention includes a process execution unit (process executer) 104, an information generation unit (generator) 103, and a calculation unit (calculator) 102. The calculation unit 102 includes a necessary volume calculation unit (necessary volume calculator) 106, and an ingestion volume calculation unit (ingestion volume calculator) 107. The information generation unit 103 includes a stress calculation unit (stress calculator) 105. The information processing apparatus 101 may be connected to an information storage unit 151, or may be communicably connected to the information storage unit 151.

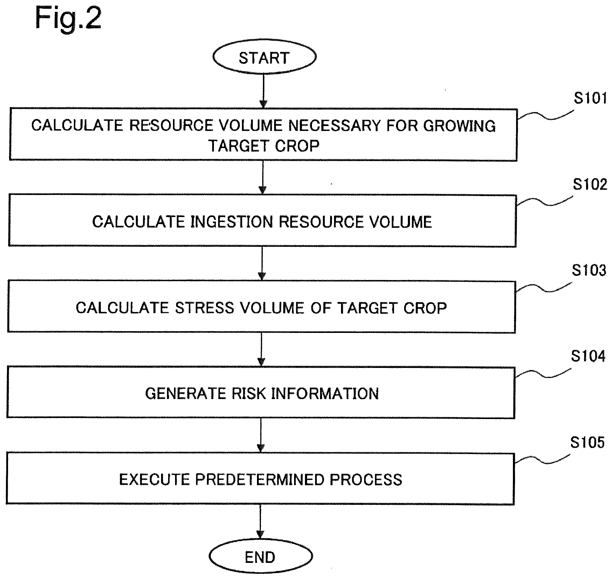

An information obtainment unit (information obtainer) 157 stores, in the information storage unit 151, information generated by a sensor, an input device, or the like. In other words, the information obtainment unit 157 collects, from, for example, an external device or the like, information relating to a target cultivated field (farming information 153, weather information 154, soil information 155, or the like), or information relating to a target crop (such as plant information 156); and stores the collected pieces of information in the information storage unit 151. The information obtainment unit 157 may execute the above-described process synchronously or asynchronously with a process to be described with reference to Fig. 2.

The information storage unit 151 may store, for example, information relating to a target crop, or a target cultivated field where the target crop is cultivated. The information storage unit 151 may store information such as the weather information 154, the soil information 155, the plant information 156, observation information 152, and the farming information 153. These pieces of information are each described specifically.

The weather information 154 is, for example, information indicating weather observed in a target cultivated field and a peripheral area thereof, or information indicating future weather relating to a target cultivated field and a peripheral area thereof. Information indicating weather is, for example, information indicating highest temperature, lowest temperature, solar radiation volume, rainfall volume, humidity, wind volume, a wind direction, and the like on a daily basis.

The soil information 155 is, for example, chemical soil component information indicating a chemical compound contained in soil in a target cultivated field, physical soil component information indicating grain size composition of soil and the like, and environment/topography information indicating an environment in which the target cultivated field is located, such as sunshine and a slope. Alternatively, the soil information 155 is, for example, soil model information indicating relevance between daylight hours and water volume contained in soil. The grain size composition indicates, for example, a ratio of sizes of grains (sand grains, detritus) which compose soil, and the like. For example, grains are classified into sand, silt, and clay in descending order of the size of the grains. A property such as water drainage in soil depends on a ratio of grains contained in the soil.

The plant information 156 is information relating to a target crop to be cultivated in a target cultivated field. The plant information 156 includes the following three pieces of information, for example. Specifically,

◦ phenology information such as time required for a plant, from which a target crop is harvestable, from sprouting until blooming, resource volume required for growing a target crop (such as water volume, and fertilizer (a volume of nutrient) volume);
◦ information such as daylight-hours relevance indicating relevance between a growth rate when water and nourishment (nutrient) are given to the plant sufficiently as necessary, and daylight hours for the target crop;
◦ transpiration model information indicating relevance between temperature, humidity, and water volume in soil; volume of water transpired from leaves of a plant; and
◦ information including volume of water ingestible by the target crop, and volume of nitrogen ingestible by the target crop.

The observation information 152 is, for example, image information indicating an image relating to a target crop (or a plant), phenology observation information indicating an observation value observed regarding phenology of the target crop, and information indicating a chlorophyll gauge, a number of fruits, weight of fruit, and the like. The farming information 153 is information relating to farming work (farming), which is carried out in a process of cultivating a target crop in a target cultivated field. The farming information 153 is, for example, information indicating a timing of carrying out irrigation work in a target cultivated field where a target crop is cultivated, and information indicating volume of irrigation (irrigation volume) at the irrigation work. The farming information 153 is, for example, information that indicates a timing of applying fertilizer to a target cultivated field where a target crop is cultivated, and information indicating a volume of the fertilizer (applied volume of fertilizer). These pieces of information may be history information indicating irrigation work (or fertilization work) in the past, or may be schedule information indicating irrigation work (or fertilization work) to be carried out hereinafter.

The plant information 156, the observation information 152, the weather information 154, the soil information 155, and the farming information 153 may include information different from the above-described example. The plant information 156, the observation information 152, the weather information 154, the soil information 155, and the farming information 153 are not limited to the above-described example.

Next, processing in the information processing apparatus 101 according to the first example embodiment of the present invention will be described in detail with reference to Fig. 2. Fig. 2 is a flowchart illustrating a flow of processing in the information processing apparatus 101 according to the first example embodiment.

The calculation unit 102 calculates, based on farming information, ingestion resource volume ingestible by a target crop from surrounding environment, when the target crop is cultivated along farming information. A process in the calculation unit 102 will be described specifically with reference to Steps S101 and S102.

In the calculation unit 102, the necessary volume calculation unit 106 reads information stored in the information storage unit 151, and calculates necessary resource volume indicating resource volume required for a target crop to grow (required for growth of a target crop), based on the read information (Step S101). The necessary resource volume may be, for example, a volume (a volume of water, a volume of fertilizer, and the like) which is required at a timing in a growth process of a plant relating to a target crop. The necessary resource volume may be, for example, volume required until the target crop is harvested. The necessary volume calculation unit 106 may read, from the information storage unit 151, the plant information 156, and set resource volume included in the read plant information 156 to the necessary resource volume.

The necessary volume calculation unit 106 reads, from the information storage unit 151, the weather information 154, the soil information 155, and the plant information 156, for example. The necessary volume calculation unit 106 calculates volume of water transpired from leaves of the target crop by applying transpiration model information included in the plant information 156 to the read weather information 154 and the soil information 155; and sets the calculated water volume to the necessary resource volume. The necessary volume calculation unit 106 calculates, for example, based on the soil information 155, the observation information 152, the plant information 156, and the like, which are stored in the information storage unit 151, volume of fertilizer required for growing a target crop, and sets the calculated volume of fertilizer to the necessary resource volume.

The necessary volume calculation unit 106 may calculate a volume different from the above-described volume. A process in the necessary volume calculation unit 106 is not limited to the above-described example.

In the calculation unit 102, the ingestion volume calculation unit 107 calculates an ingestion resource volume indicating resource volume ingestible by a target crop from surrounding environment, when the target crop is cultivated along farming information (Step S102). The ingestion resource volume is water volume, fertilizer volume, or the like, which is ingestible by a target crop from surrounding environment, when the target crop is cultivated along farming information. Further, the ingestion resource volume may be, for example, volume to be ingested at a timing in a process of growing a plant relating to a target crop, or may be volume to be ingested until the target crop is harvested.

The ingestion volume calculation unit 107 reads, from the information storage unit 151, the farming information 153, and the soil information 155, and the like, for example.

For example, the ingestion volume calculation unit 107 calculates water volume in soil, based on a water volume initial value in the soil information 155, irrigation volume in the farming information 153, and transpiration volume in plant information and weather information. Further, the ingestion volume calculation unit 107 calculates minimum water retention volume, based on the soil information 155. The minimum water retention volume is a threshold of water volume such that a crop cannot ingest water any more when the water volume soil is equal to or lower than the threshold. The ingestion volume calculation unit 107 calculates ingestion resource volume by calculating a difference between the calculated soil water volume and the minimum water retention volume.

Ingestion resource volume has been described by referring to a water volume. However, water volume is an example of resource volume.

A process of calculating an ingestion resource volume by the ingestion volume calculation unit 107 is not limited to the above-described example.

In the information generation unit 103, the stress calculation unit 105 calculates, based on the necessary resource volume calculated by the necessary volume calculation unit 106, and the ingestion resource volume calculated by the ingestion volume calculation unit 107 in the calculation unit 102, stress volume (e.g., a volume of water-related stress and a volume of nitrogen-related stress suffered by a target crop), which indicates a degree of stress suffered by a target crop in a target cultivated field (Step S103). In other words, the stress calculation unit 105 calculates stress volume by calculating a difference between the necessary resource volume calculated by the necessary volume calculation unit 106 and the ingestion resource volume calculated by the ingestion volume calculation unit 107. The stress calculation unit 105 may calculate the difference by using a differential or a ratio. The stress volume may be, for example, a value indicating stress suffered at a timing in a growth process of plant relating to a target crop, or may be a value indicating stress suffered until the target crop is harvested. The stress volume is defined, for example, based on a difference between ingestion resource volume and necessary resource volume. The stress volume may be a value, or may be information indicating a degree. The stress may become a factor of impeding growth of a target crop. For example, when a difference occurs between necessary resource volume and ingestion resource volume, a target crop suffers stress.

The information generation unit 103 generates, based on the stress volume calculated by the stress calculation unit 105, risk information representing a risk degree of yield decrease of a target crop (Step S104). The risk information is, specifically, information representing a suitability degree of farming work indicated by the farming information 153 read by the ingestion volume calculation unit 107 to a target crop.

As described above, when a target crop suffers stress in a target cultivated field, growth of the target crop is impeded and thereby a yield of the target crop in the target cultivated field decreases. The information generation unit 103 calculates total volume that is a sum of the stress volume calculated by the stress calculation unit 105, and generates risk information by calculating a risk of decrease of the yield, based on the total volume. Alternatively, for example, the information generation unit 103 may calculate weighed volume, which is acquired by weighing water stress, nitrogen stress, or the like, which is suffered by a target crop according to a predetermined weight, calculate the total volume that is a sum of the calculated volume, and generate risk information by calculating a risk of decrease of the yield, based on the calculated total volume. A process of generating the risk information by the information generation unit 103 is not limited to the above-described example.

Next, the process execution unit 104 executes a predetermined process (Step S105). The predetermined process is, for example, a process of displaying, on a display device (not illustrated), a message indicating that an insurance fee for the target crop is additionally collected, when a stress volume calculated by the stress calculation unit 105 is higher than a first stress volume (to be described later in a second example embodiment) in risk information generated by the information generation unit 103. Alternatively, the predetermined process is, for example, a process of displaying, on a display device (not illustrated), a message indicating that an insurance fee for the target crop is refunded, when the stress volume is lower than a second stress volume (to be described later in the second example embodiment). Further alternatively, the predetermined process may be a process of executing both of the above-described two processes. The predetermined process may be, for example, a process of calculating an amount of money to be refunded, based on risk information. In this case, the process execution unit 104 calculates an amount of money to be refunded, based on the risk information generated by the information generation unit 103, and displays the calculated amount of money. The predetermined process may be a process of displaying, on a display device (not illustrated), generated risk information.

The predetermined process may be a process of recommending an insurance plan in accordance with the risk information. The predetermined process may be, for example, a process of recommending an insurance plan covering a wide risk, although an insurance fee is high, when a value of risk included in the risk information is high or a risk degree is high; and recommending an insurance plan covering a limited risk at a low insurance fee, when a value of risk included in the risk information is low, or a risk degree is low. The predetermined process is not limited to the above-described example.

The risk information may be a value or may be information indicating a degree.

Next, an advantageous effect regarding the information processing apparatus 101 according to the first example embodiment of the present invention will be described.

The information processing apparatus 101 according to the first example embodiment is able to accurately evaluate farming work to be carried out in a process of cultivating a crop (target crop). A reason for this is that, when a process for a target cultivated field or a target crop is executed along farming information, a yield decrease of the target crop due to stress suffered by the target crop cultivated in the target cultivated field is quantitatively calculated by the information processing apparatus 101. This will be described more specifically. The information processing apparatus 101 calculates stress volume indicating a degree of stress suffered by a target crop, when work is carried out along farming information. As described above, when stress suffered by a target crop is suitable (e.g., stress is zero), a yield of the target crop is maximum. As the stress increases, a yield of the target crop decreases, as compared with a case where stress is suitable. The information processing apparatus 101 generates risk information representing a risk degree of a yield decrease of the target crop, based on the stress volume. Therefore, risk information to be generated by the information processing apparatus 101 accurately indicates a suitability of degree of farming work indicated by farming information to a target crop. Consequently, the information processing apparatus 101 is able to accurately evaluate farming work to be carried out in a process of cultivating a crop.

Further, for example, when a predetermined process is a process of calculating an insurance fee, based on risk information and the like, the information processing apparatus 101 according to the first example embodiment is able to appropriately calculate an insurance fee for a business engaging in agriculture. A reason for this is that the information processing apparatus 101 calculates an ingestion resource volume, and generates risk information, based on a necessary resource volume and the ingestion resource volume. As described above, since the risk information accurately indicates a suitability degree of farming work indicated by farming information to a target crop, the information processing apparatus 101 is able to set an appropriate insurance fee by a process of calculating an insurance fee based on the risk information. For example, an insurance company can additionally collect an insurance fee, based on an insurance fee calculated by the information processing apparatus 101 relating to farming carried out by a business engaging in agriculture, or refund an insurance fee. Consequently, an insurance company can appropriately set an insurance fee that matches the business engaging in agriculture.

In the above-described description, the information generation unit 103 generates risk information, based on necessary resource volume and ingestion resource volume. The example embodiment, however, is not limited to the above. The information generation unit 103 may generate risk information, based on a size or a color of fruits and leaves estimated regarding a growth process of a target crop; or a size or a color of fruits and leaves of a target crop in case that the target crop is cultivated along farming information.

<Second example embodiment>

Next, a second example embodiment according to the present invention on the basis of the above-described first example embodiment will be described.

In the following description, a characteristic portion according to the present example embodiment will be mainly described. Further, overlapping description on configurations similar to those of the above-described first example embodiment will be omitted by assigning same reference numbers.

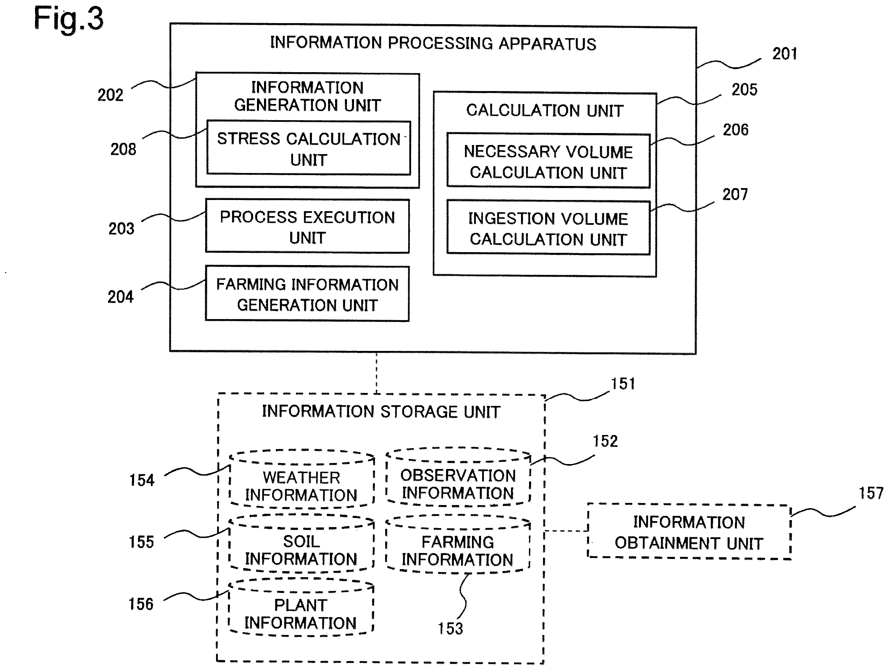

A configuration of an information processing apparatus 201 according to the second example embodiment of the present invention will be described in detail with reference to Fig. 3. Fig. 3 is a block diagram illustrating a configuration of the information processing apparatus 201 according to the second example embodiment of the present invention.

The information processing apparatus 201 according to the second example embodiment of the present invention includes a process execution unit (process executer) 203, an information generation unit (information generator) 202, a calculation unit (calculator) 205, and a farming information generation unit (farming information generator) 204. The calculation unit 205 includes a necessary volume calculation unit (necessary volume calculator) 206 and an ingestion volume calculation unit (ingestion volume calculator) 207. The information generation unit 202 includes a stress calculation unit (stress calculator) 208. The information processing apparatus 201 may be connected to an information storage unit 151, or may be communicably connected to the information storage unit 151.

The necessary volume calculation unit 206 executes a process similar to the process executed by the necessary volume calculation unit 106 (Fig. 1) according to the first example embodiment. The ingestion volume calculation unit 207 executes a process similar to the process executed by the ingestion volume calculation unit 107 (Fig. 1) according to the first example embodiment. The stress calculation unit 208 executes a process similar to the process executed by the stress calculation unit 105 (Fig. 1) according to the first example embodiment.

The farming information generation unit 204 generates farming information indicating a cultivation process, when a yield of a target crop becomes large. The farming information generation unit 204 may generate farming information, when a yield of the target crop becomes maximum. Alternatively, the farming information generation unit 204 may generate farming information in which risk information relating to a target crop is low.

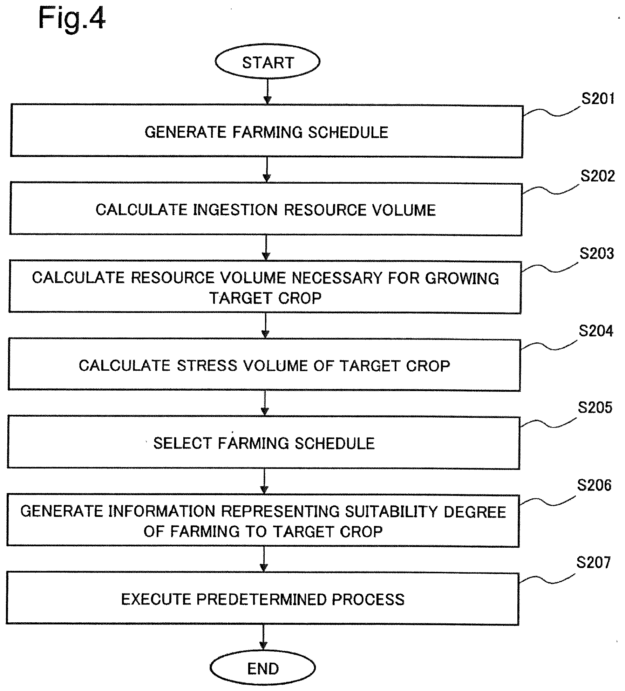

Next, processing in the information processing apparatus 201 according to the second example embodiment of the present invention will be described in detail with reference to Fig. 4. Fig. 4 is a flowchart illustrating a flow of processing in the information processing apparatus 201 according to the second example embodiment.

The farming information generation unit 204 generates a plurality of farming schedules, each of which is acquired by combining fertilization volume and a timing of fertilization work for a target cultivated field, irrigation volume and a timing of irrigation work for a target cultivated field, and the like (Step S201). For example, the farming information generation unit 204 may set a plurality of levels of irrigation volume or a fertilization volume per day, select one level each from among the plurality of levels, and generate a farming schedule by combining the selected level over a plurality of days. In this case, a farming schedule to be generated by the farming information generation unit 204 is information indicating a certain cultivation process.

The ingestion volume calculation unit 207 calculates, for each farming schedule generated by the farming information generation unit 204, ingestion resource volume indicating resource volume to be ingested (or ingested) by a target crop, when the target crop is cultivated along the farming schedule (Step S202). The necessary volume calculation unit 206 calculates necessary resource volume required for growth of the target crop (Step S203). The necessary volume calculation unit 206 may read plant information 156 from the information storage unit 151, and set resource volume included in the read plant information 156 to the necessary resource volume.

Step S202 is a process similar to Step S102 (Fig. 2). Step S203 is a process similar to Step S101 (Fig. 2).

The stress calculation unit 208 generates information (stress volume) indicating stress and the like suffered by the target crop, based on a value of ingestion resource volume calculated in Step S202 by the ingestion volume calculation unit 207, and a value of necessary resource volume calculated in Step S203 by the necessary volume calculation unit 206 (Step S204).

Step S204 is a process similar to Step S103 (Fig. 2).

The farming information generation unit 204 calculates a minimum stress volume among stress volumes calculated by the stress calculation unit 208, and selects a farming schedule with taking the minimum stress volume in a plurality of farming schedules (Step S205). In this case, a farming schedule to be selected by the farming information generation unit 204 is, for example, a farming schedule, when a yield of a target crop is largest. The farming information generation unit 204 generates farming information including a farming schedule selected in Step S205. Hereinafter, since farming information to be generated by the farming information generation unit 204 is farming information being a reference for comparison, the farming information may also be referred to as "reference farming information". For example, a process of generating farming information by the farming information generation unit 204 may be also implemented by a repetition process to be described in the following. The reference farming information indicates farming information capable of achieving a maximum yield, when a target crop is cultivated along the reference farming information.

The farming information generation unit 204 includes a storage area capable of storing a farming schedule and stress volume relating to the farming schedule. For convenience of explanation, it is assumed that a stress volume takes a plus value, and a predetermined value is stored in the storage area as a threshold value of stress volume. The predetermined value is, for example, a value of stress volume in such a way that volume of yield decrease falls within an allowable range to a business engaging in agriculture. Specifically, when a value of a stress volume to be calculated is smaller than a value of a stress volume stored in the storage area, a volume of yield decrease falls within the allowable range.

The farming information generation unit 204 compares the stress volume (hereinafter, referred to as a "first stress volume"), which is calculated relating to a farming schedule (hereinafter, referred to as a "first farming schedule") by the stress calculation unit 208, and a stress volume (hereinafter, referred to as a "second stress volume"), which is stored in the storage area. When the first stress volume is determined to be smaller than the second stress volume, the farming information generation unit 204 updates a farming schedule stored in the storage area, and a stress volume relating to the farming schedule by using the first farming schedule and the first stress volume. In this case, the farming information generation unit 204 determines that the first farming schedule is more suitable than the farming schedule stored in the storage area. When the first stress volume is determined to be larger than the second stress volume, the farming information generation unit 204 does not update the farming schedule stored in the storage area, and the stress volume relating to the farming schedule. In this case, the farming information generation unit 204 determines that the farming schedule stored in the storage area is more suitable than the first farming schedule. The farming information generation unit 204 stores, in the storage area, a farming schedule with taking a minimum stress volume in a plurality of farming schedules by repeatedly executing the above-described process. Herein, an example of a process of calculating a difference between a first farming schedule and a second farming schedule different from the first farming schedule by the farming information generation unit 204 will be described.

The farming information generation unit 204 calculates, for example, a difference between a first farming schedule and a second farming schedule by calculating a distance (Euclidean distance or the like) between a value included in the first farming schedule and a value included in the second farming schedule. In this case, the larger the value of the distance is, the higher the risk degree regarding the first farming schedule is. A method for calculating a difference between a first farming schedule and a second farming schedule is not limited to the above-described example. Herein, a process of calculating a difference between a first farming schedule and a second farming schedule according to a Euclidean distance will be specifically described.

For convenience of explanation, it is assumed that $D_i$ (where $1 \leq i \leq n$) indicates a timing in a cultivation process in a farming schedule. It is assumed that $D_1$ indicates a start timing of the cultivation process. It is assumed that $D_n$ indicates an end timing of the cultivation process. It is assumed that, in a cultivation process indicated by a first farming schedule, irrigation volume to be applied at the timing $D_i$ is indicated as $NI_i$, and fertilization volume to be applied at the timing $D_i$ is indicated as $NF_i$. In a cultivation process indicated by a second farming schedule, it is assumed that irrigation volume to be applied at the timing $D_i$ is indicated as $PI_i$, and fertilization volume to be applied at the timing $D_i$ is indicated as $PF_i$. Further, it is assumed that a farming schedule includes only numerical values indicating irrigation volume and fertilization volume.

In this case, the farming information generation unit 204 calculates a distance $UD_i$ relating to the timing $D_i$ among Euclidean distances between a first farming schedule and a second farming schedule according to Eq. 1.

$$UD_i = sqrt((NI_i - PI_i)^2 + (NF_i - PF_i)^2) \qquad \dots (Eq. \ 1)$$

(where "sqrt" denotes a square root)

The information generation unit 202 calculates a Euclidean distance between a first farming schedule and a second farming schedule according to Eq. 2.

$$UD = sqrt(\sum_{i=1,n} UD_i^2) \qquad \dots (Eq. \ 2)$$

(where $\sum_{i=1,n}$ denotes that calculating a total value regarding i that satisfies $1 \leq i \leq n$).

The information generation unit 202 generates information representing a suitability degree of a cultivation process indicated by the first farming information to a target crop based on, for example, a difference between farming information (hereinafter, referred to as "first farming information), which is read by the ingestion volume calculation unit 207 in response to input of farming information by a business engaging in agriculture, and farming information (hereinafter, referred to as "second farming information") indicating a farming schedule with taking a minimum stress volume (Step S206). The second farming information is generated by the farming information generation unit 204 in Step S205. For example, information representing a suitability degree of a cultivation process indicated by first farming information to a target crop indicates a numerical value indicating quality of first farming information, or a numerical value indicating a risk degree of a yield decrease of a target crop, when the target crop is cultivated along a cultivation process indicated by first farming information. The first farming information indicates current farming information, for example.

As an aspect different from the above-described process, the information generation unit 202 may calculate volume of stress suffered by a target crop, when the target crop is cultivated along a cultivation process indicated by input farming information. In this case, the information generation unit 202 generates information representing a suitability degree of a cultivation process to a target crop, based on a magnitude of difference between the calculated stress volume and a volume of stress suffered by a target crop, when the target crop is cultivated along a cultivation process indicated by optimum farming information. Further, the information generation unit 202 may calculate a suitability degree of a cultivation process to a target crop, based on a stress volume difference, or a yield difference of a target crop, for example.

The process execution unit 203 executes a predetermined process (Step S207). The predetermined process is a process similar to the process to be executed in Step S105, and, for example, may be a process of displaying, on a display device (not illustrated), farming information generated by the farming information generation unit 204.

Next, an advantageous effect regarding the information processing apparatus 201 according to the second example embodiment of the present invention will be described.

The information processing apparatus 201 according to the second example embodiment is able to accurately evaluate a process of growing a crop. A reason for this is a reason similar to the reason described in the first example embodiment.

Further, the information processing apparatus 201 according to the second example embodiment of the present invention is able to present a business engaging in agriculture with a cultivation process suitable for cultivating a target crop. A reason for this is that farming information to be generated by the farming information generation unit 204 is farming information in a case where a yield of a target crop is large.

In the above-described process, information representing a suitability degree of a cultivation process indicated by first farming information to a target crop is calculated, based on a difference between the first farming information and second farming information. Alternatively, the information may be calculated, based on a difference between risk information to be calculated based on the first farming information, and risk information to be calculated based on the second farming information.

<Third example embodiment>

Next, a third example embodiment according to the present invention on the basis of the above-described first example embodiment will be described.

In the following description, a characteristic portion according to the present example embodiment will be mainly described. Further, overlapping description on configurations similar to those of the above-described first example embodiment will be omitted by assigning same reference numbers.

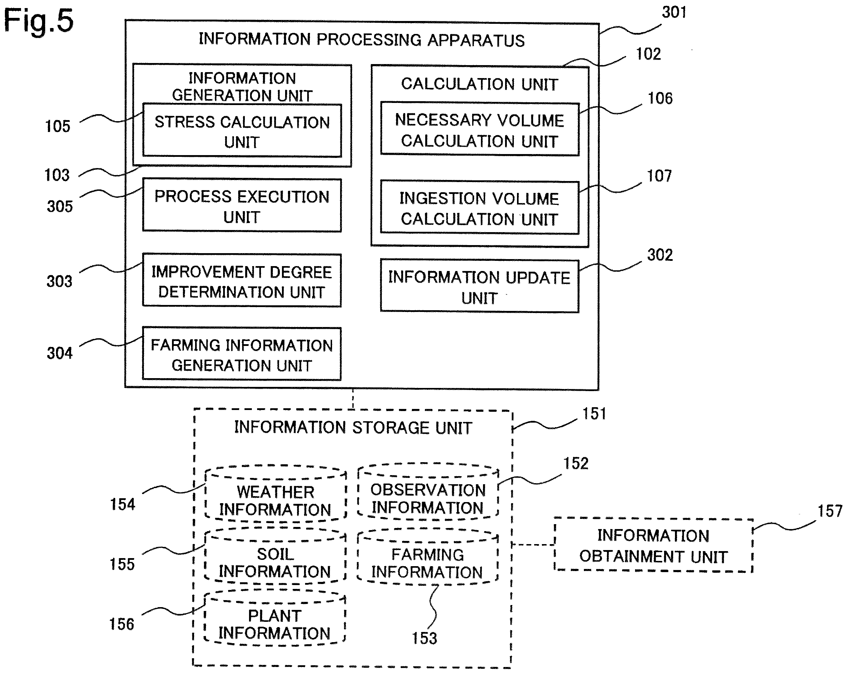

A configuration of an information processing apparatus 301 according to the third example embodiment of the present invention will be described in detail with reference to Fig. 5. Fig. 5 is a block diagram illustrating a configuration of the information processing apparatus 301 according to the third example embodiment of the present invention.

The information processing apparatus 301 according to the third example embodiment includes a process execution unit (process executer) 305, an information generation unit (information generator) 103, a calculation unit (calculator) 102, a farming information generation unit (farming information generator) 304, an improvement degree determination unit (improvement degree determiner) 303, and an information update unit (information updater) 302. The calculation unit 102 includes a necessary volume calculation unit 106 and an ingestion volume calculation unit 107. The information generation unit 103 includes a stress calculation unit 105. The information processing apparatus 301 may be connected to an information storage unit 151, or may be communicably connected to the information storage unit 151.

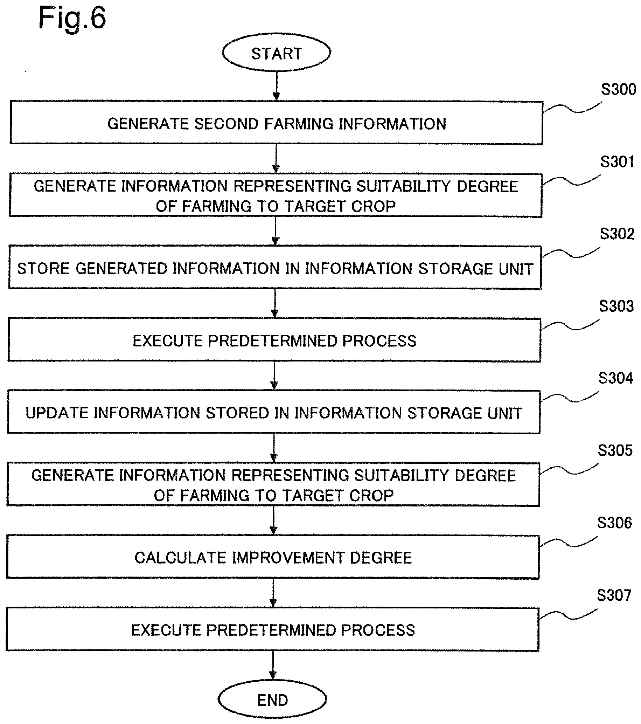

Next, processing in the information processing apparatus 301 according to the third example embodiment of the present invention will be described in detail with reference to Fig. 6. Fig. 6 is a flowchart illustrating a flow of processing in the information processing apparatus 301 according to the third example embodiment.

The farming information generation unit 304 generates farming information by executing a process similar to the process described with reference to Fig 4 (Step S300). Specifically, farming information generated by the farming information generation unit 304 corresponds to the second farming information in the second example embodiment. Hereinafter, farming information generated by the farming information generation unit 304 is referred to as second farming information. The information generation unit 103 generates, for example, based on a difference between second farming information generated by the farming information generation unit 304, and farming information (first farming information) read by the ingestion volume calculation unit 107 in response to input of farming information by a business engaging in agriculture, information representing a suitability degree of a cultivation process indicated by the first farming information to a target crop (Step S301). Herein, farming information (first farming information) read by the ingestion volume calculation unit 107 corresponds to the first farming information in the second example embodiment. Hereinafter, farming information read by the ingestion volume calculation unit 107 is referred to as first farming information. The farming information generation unit 304 executes processes illustrated in Steps S201 to S204 in Fig. 4, for example, in the process illustrated in Step S301. For example, information representing a suitability degree of a cultivation process indicated by first farming information to a target crop indicates a numerical value representing quality of the first farming information, or a numerical value representing a risk degree of a yield decrease of a target crop, when the target crop is cultivated along a cultivation process indicated by the first farming information. The farming information generation unit 304 stores information including the generated first farming information, the second farming information, and the generated information in the information storage unit 151 (Step S302).

The process execution unit 305 executes a predetermined process (Step S303). The process to be executed in Step S303 is a process similar to the process to be executed in Step S105 in Fig. 2. For example, the predetermined process is a process of displaying, on a display device (not illustrated), risk information calculated by the information generation unit 103.

The information update unit 302 receives farming information relating to farming, or information such as observation information observed by a sensor, and updates (or stores) information stored in the information storage unit 151 by using the received information (Step S304). The farming information relating to farming is, for example, current farming information. When the received information coincides with information stored in the information storage unit 151, the information update unit 302 do not have to update (or store) the information stored in the information storage unit 151. The information update unit 302 receives, for example, farming information from a business engaging in agriculture who carries out farming in a target cultivated field. The information update unit 302 receives, for example, information such as weather information 154 and soil information 155 from a sensor or the like.

The calculation unit 102 reads updated information from the information storage unit 151 and calculates, based on the read information, a value such as ingestion resource volume and necessary resource volume by executing a process similar to the processes indicated in Steps S101 and S102 illustrated in Fig. 2. The information generation unit 103 generates information representing a risk degree of a yield decrease of a target crop by executing a process similar to Steps S103 and S104 in Fig. 1, based on a value calculated by the calculation unit 102. Specifically, the information generation unit 103 generates information representing a suitability degree of a cultivation process indicated by farming information (updated farming information) generated based on updated information to a target crop (Step S305).

The improvement degree determination unit 303 calculates an improvement degree based on a difference between information indicating a suitability degree of a cultivation process indicated by first farming information to a target crop, which is calculated according to the process illustrated in Step S301, and information representing a suitability degree of a cultivation process indicated by updated farming information to the target crop, which is calculated according to the process illustrated in Step S305 (Step S306).

The improvement degree determination unit 303 calculates an improvement degree, for example, by calculating a difference between risk information calculated in accordance with the process illustrated in Step S301, and risk information calculated in accordance with the process illustrated in Step S305. Specifically, by referring to the improvement degree, a business engaging in agriculture can grasp whether farming has been carried out along second farming information generated in Step S300. The second farming information is farming information with taking a minimum stress volume. For example, it is assume that improvement degree is defined by a value acquired by subtracting, from risk information calculated in accordance with the process illustrated in Step S301, risk information calculated in accordance with the process illustrated in Step S305. When the improvement degree has a plus value and is large, it may be conceived that a possibility that a business engaging in agriculture has carried out farming along second farming information is high. On the other hand, when the improvement degree has a minus value and is small, it may be conceived that a possibility that a business engaging in agriculture has carried out farming along second farming information is low.

The process execution unit 305 executes a predetermined process (Step S307). The predetermined process may be a process of displaying, on a display device (not illustrated), a message prompting to additionally collect an insurance fee, when an improvement degree calculated by the improvement degree determination unit 303 is smaller than a first predetermined volume, and displaying, on the display device (not illustrated), a message prompting to refund an insurance fee, when the improvement degree calculated by the improvement degree determination unit 303 is larger than a second predetermined volume. In this case, an insurance company can appropriately collect an insurance fee by referring to information displayed on a display device.

The predetermined process is not limited to the above-described process.

As described in the second example embodiment, the improvement degree determination unit 303 may calculate an improvement degree based on a difference in farming information. This process will be described specifically.

The improvement degree determination unit 303 compares, among pieces of information stored in the information storage unit 151, farming information observed (or calculated) at a first timing, and farming information observed (or calculated) at a second timing. For example, the improvement degree determination unit 303 compares farming information stored in the information storage unit 151 and farming information received by the information update unit 302. For convenience of description, it is assumed that farming information stored in the information storage unit 151 is observed at a "first timing", and farming information received by the information update unit 302 is observed at a "second timing". The improvement degree determination unit 303 calculates (or determines) an improvement degree of farming to be carried out in a target cultivated field, for example, by comparing pieces of farming information observed at the two timings. The process of calculating the improvement degree is calculated, for example, based on a distance described in the second example embodiment.

When a process of calculating an improvement degree is described more specifically, for example, the improvement degree determination unit 303 calculates a Euclidean distance between first farming information and second farming information at a first timing and a second timing, respectively. When the Euclidean distance at the first timing is shorter than the Euclidean distance at the second timing, the improvement degree determination unit 303 determines that farming at the second timing is improved, as compared with farming at the first timing.

The process in the improvement degree determination unit 303 is not limited to the above-described example. For example, the first timing and the second timing may be any one of a future timing, a current timing, or a past timing.

Next, an advantageous effect regarding the information processing apparatus 301 according to the third example embodiment of the present invention will be described.

The information processing apparatus 301 according to the third example embodiment is able to accurately evaluate a process of growing a crop. A reason for this is a reason similar to the reason described in the first example embodiment.

Further, the information processing apparatus 301 according to the third example embodiment of the present invention is able to set an appropriate insurance fee depending on the presence or absence of improvement on the farming, after presenting a business engaging in agriculture with an improvement plan of farming. A reason for this is that the information processing apparatus 301 executes a process (process of Step S307 in Fig. 6) of calculating an insurance fee depending on whether farming has been improved, after prompting a business engaging in agriculture to improve farming, based on a risk of a yield decrease estimated in Step S301 (process of Step S305 in Fig. 6), and again, based on updated information.

<Fourth example embodiment>

A fourth example embodiment of the present invention will be described.

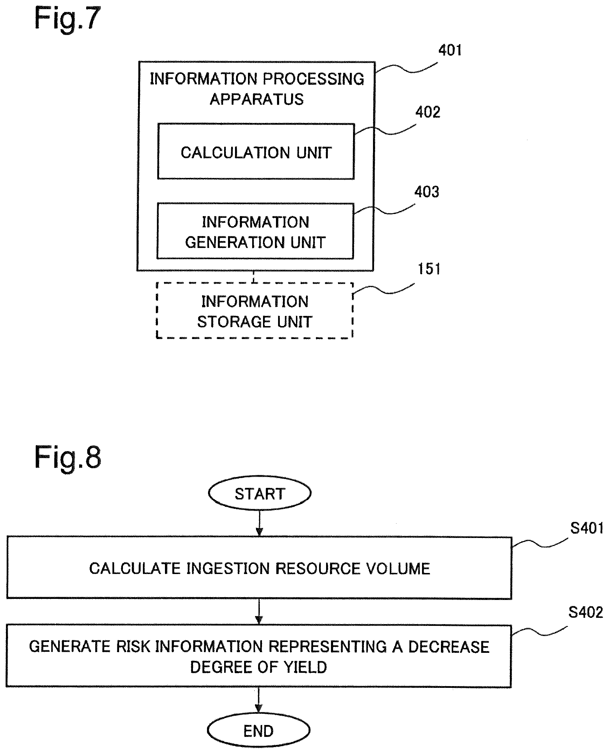

A configuration of an information processing apparatus 401 according to a fourth example embodiment of the present invention will be described in detail with reference to Fig. 7. Fig. 7 is a block diagram illustrating a configuration of the information processing apparatus 401 according to the fourth example embodiment of the present invention.

The information processing apparatus 401 according to the fourth example embodiment includes a calculation unit (calculator) 402 and an information generation unit (information generator) 403. The information processing apparatus 401 may be connected to an information storage unit 151, or may be communicably connected to the information storage unit 151.

The information storage unit 151 stores weather information 154, soil information 155, plant information 156, and the like, as described with reference to Fig. 1.

Next, processing in the information processing apparatus 401 according to the fourth example embodiment of the present invention will be described in detail with reference to Fig. 8. Fig. 8 is a flowchart illustrating a flow of processing in the information processing apparatus 401 according to the fourth example embodiment.

The calculation unit 402 reads farming information 153 stored in the information storage unit 151. As described in the first example embodiment, the farming information 153 indicates a process of cultivating a target crop in a target cultivated field. The calculation unit 402 calculates, based on the read farming information 153, ingestion resource volume indicating a resource volume ingestible by a target crop from a surrounding environment, when the target crop is cultivated along the farming information (Step S401). The calculation unit 402 may generate the ingestion resource volume by executing the processes illustrated in Steps S101 to S102 in Fig. 2.

The information generation unit 403 generates, based on an ingestion resource volume calculated by the calculation unit 402, risk information representing a risk degree of a yield decrease of a target crop (Step S402).

When the calculation unit 402 generates an ingestion resource volume in accordance with the processes illustrated in Steps S101 to S102 in Fig. 2, the information generation unit 403 generates stress volume indicating a degree of stress suffered by a target crop by executing the process illustrated in Step S103 in Fig. 2. The information generation unit 403 generates, based on the generated stress volume, risk information representing a risk degree of a yield decrease of a target crop by executing the process illustrated in Step S104 in Fig. 2.

As described with reference to Fig. 4, the information generation unit 403 may generate risk information representing a risk degree of a yield decrease of a target crop by calculating a distance between reference farming information and input farming information.

The information generation unit 403 and the calculation unit 402 may be implemented by using a function of each unit included in the information processing apparatus 301 (Fig. 5).

Next, an advantageous effect regarding the information processing apparatus 401 according to the fourth example embodiment of the present invention will be described.

The information processing apparatus 401 according to the fourth example embodiment is able to accurately evaluate a process of growing a crop. A reason for this is that the information processing apparatus 401 generates determination information having a high relevance to a risk degree of a yield decrease of a target crop, and generates risk information indicating the risk degree, based on the generated determination information. A reason for this will be described specifically.

Farming information indicating a process of growing a target crop, or observation information observed in the cultivation process has relevance with a growing degree of the target crop. The information processing apparatus 401 generates risk information relating to a yield of a target crop by executing a process as described with reference to Fig. 8, based on at least one of these pieces of information. Therefore, since risk information generated by the information processing apparatus 401 is information generated based on information regarding a growing degree of a target crop, the risk information accurately indicates a degree of risk which may be suffered by the target crop.

(Hardware Configuration Example)

A configuration example of hardware resources that achieve an information processing apparatus according to each example embodiment of the present invention will be described. However, the information processing apparatus may be achieved using physically or functionally at least two calculation processing apparatuses. Further, the information processing apparatus may be achieved as a dedicated apparatus.

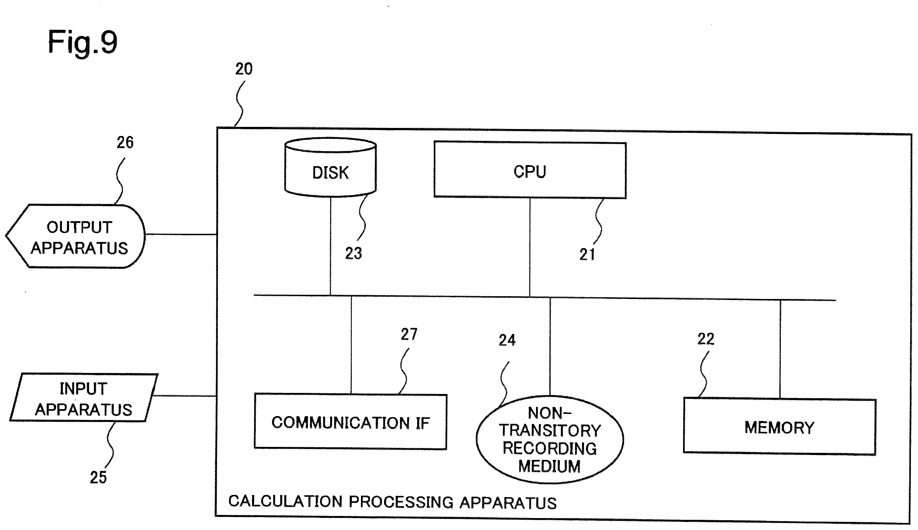

Fig. 9 is a block diagram schematically illustrating a hardware configuration of a calculation processing apparatus capable of achieving information processing apparatus according to each example embodiment of the present invention. A calculation processing apparatus 20 includes a central processing unit (CPU) 21, a memory 22, a disk 23, a non-transitory recording medium 24, and a communication interface (hereinafter, referred to as. "communication I/F") 27. The calculation processing apparatus 20 may connect an input apparatus 25 and an output apparatus 26. The calculation processing apparatus 20 can execute transmission/reception of information to/from another calculation processing apparatus and a communication apparatus via the communication I/F 27.

The non-transitory recording medium 24 is, for example, a computer-readable Compact Disc, Digital Versatile Disc. The non-transitory recording medium 24 may be Universal Serial Bus (USB) memory, Solid State Drive or the like. The non-transitory recording medium 24 allows a related program to be holdable and portable without power supply. The non-transitory recording medium 24 is not limited to the above-described media. Further, a related program can be carried via a communication network by way of the communication I/F 27 instead of the non-transitory recording medium 24.

In other words, the CPU 21 copies, on the memory 22, a software program (a computer program: hereinafter, referred to simply as a "program") stored in the disk 23 when executing the program and executes arithmetic processing. The CPU 21 reads data necessary for program execution from the memory 22. When display is needed, the CPU 21 displays an output result on the output apparatus 26. When a program is input from the outside, the CPU 21 reads the program from the input apparatus 25. The CPU 21 interprets and executes an information processing program (Fig. 2, Fig. 4, Fig. 6, or Fig. 8) present on the memory 22 corresponding to a function (processing) indicated by each unit illustrated in Fig. 1, Fig. 3, Fig. 5, or Fig. 7 described above. The CPU 21 sequentially executes the processing described in each example embodiment of the present invention.

In other words, in such a case, it is conceivable that the present invention can also be made using the information processing program. Further, it is conceivable that the present invention can also be made using a computer-readable, non-transitory recording medium storing the information processing program.

The present invention has been described using the above-described example embodiments as example cases. However, the present invention is not limited to the above-described example embodiments. In other words, the present invention is applicable with various aspects that can be understood by those skilled in the art without departing from the scope of the present invention.

This application is based upon and claims the benefit of priority from Japanese patent application No. 2017-001790, filed on January 10, 2017, the disclosure of which is incorporated herein in its entirety.

[Reference signs List]

| | |
|---|---|
| 101 | information processing apparatus |
| 102 | calculation unit |
| 103 | information generation unit |
| 104 | process execution unit |
| 105 | stress calculation unit |
| 106 | necessary volume calculation unit |
| 107 | ingestion volume calculation unit |
| 151 | information storage unit |
| 152 | observation information |
| 153 | farming information |
| 154 | weather information |
| 155 | soil information |

EP 3 570 246 A1

| | |
|---|---|
| 156 | plant information |
| 157 | information obtainment unit |
| 201 | information processing apparatus |
| 202 | information generation unit |
| 203 | process execution unit |
| 204 | farming information generation unit |
| 205 | calculation unit |
| 206 | necessary volume calculation unit |
| 207 | ingestion volume calculation unit |
| 208 | stress calculation unit |
| 301 | information processing apparatus |
| 302 | information update unit |
| 303 | improvement degree determination unit |
| 304 | farming information generation unit |
| 305 | process execution unit |
| 401 | information processing apparatus |
| 402 | calculation unit |
| 403 | information generation unit |
| 20 | calculation processing apparatus |
| 21 | CPU |
| 22 | memory |
| 23 | disk |
| 24 | non-transitory recording medium |
| 25 | input apparatus |
| 26 | output apparatus |
| 27 | communication IF |

**Claims**

1. An information processing apparatus comprising:

    calculation means for calculating ingestion resource volume based on farming information regarding to farming work in a process of cultivating a target crop in a target field, the ingestion resource volume representing ingestible volume of the target crop cultivated along the farming information; and
    information generation means for generating risk information representing a risk degree of yield decrease of the target crop based on necessary resource volume required for growing the target crop and the ingestion resource volume.

2. The information processing apparatus according to claim 1, further comprising:
    process execution means for executing a process based on the risk information.

3. The processing information apparatus according to claim 1 or claim 2 further comprising:

    storage for storing standard farming information, wherein
    the standard farming information is farming information that enables maximum yield in case of cultivating along the standard farming information and
    the information generation means generates the risk information based on a difference between the standard farming information and the farming information.

4. The processing information apparatus according to claim 2 further comprising:

    improvement degree calculation means for calculating a difference between the risk information generated by the information generation means based on first observation information observed at a first timing and the risk information generated by the information generation means based on second observation information observed at second timing after the first timing, wherein
    the process execution means executes a process based on the improvement degree calculated by the improvement degree calculation means.

14

EP 3 570 246 A1

**5.** The information processing apparatus according to any one of claims 1 to 4, wherein
the calculation means calculates the ingestion resource volume by calculating a difference between minimum volume of water/nutrient and volume of water/nutrient included in soil, the minimum volume being a volume of water/nutrient that the target crop can ingest from the soil.

**6.** The information processing apparatus according to claim 2, wherein
the process execution means executes, as the process based on the risk information, a process depending on the degree represented by the risk information.

**7.** The information processing apparatus according to claim 2 further comprising:

farming information generation means for selecting the farming information with the smallest degree of the risk information among a plurality of the farming schedules different from each other and generating farming information including the selected farming schedule, wherein
the farming information includes a farming schedule and
the information generation means generates the risk information for the farming information generated by the farming information generation means.

**8.** The information processing apparatus according to claim 7, wherein
the process execution means displays the farming information generated by the farming information generation means.

**9.** An information processing method by a calculation processing apparatus, the method comprising:

calculating ingestion resource volume based on farming information regarding to farming work in a process of cultivating a target crop in a target field, the ingestion resource volume representing ingestible volume of the target crop cultivated along the farming information; and
generating risk information representing a risk degree of yield decrease of the target crop based on necessary resource volume required for growing the target crop and the ingestion resource volume.

**10.** A recording medium storing an information processing program causing a computer to achieve:

a calculation function for calculating ingestion resource volume based on farming information regarding to farming work in a process of cultivating a target crop in a target field, the ingestion resource volume representing ingestible volume of the target crop cultivated along the farming information; and
an information generation function for generating risk information representing a risk degree of yield decrease of the target crop based on necessary resource volume required for growing the target crop and the ingestion resource volume.

15

# Fig.1

# Fig.2

```
                    ┌─────────┐
                    │  START  │
                    └─────────┘
                         │
                         ▼
┌──────────────────────────────────────────────────┐        S101
│   CALCULATE RESOURCE VOLUME NECESSARY FOR GROWING  │
│              TARGET CROP                            │
└──────────────────────────────────────────────────┘
                         │
                         ▼
┌──────────────────────────────────────────────────┐        S102
│        CALCULATE INGESTION RESOURCE VOLUME         │
└──────────────────────────────────────────────────┘
                         │
                         ▼
┌──────────────────────────────────────────────────┐        S103
│      CALCULATE STRESS VOLUME OF TARGET CROP        │
└──────────────────────────────────────────────────┘
                         │
                         ▼
┌──────────────────────────────────────────────────┐        S104
│           GENERATE RISK INFORMATION                │
└──────────────────────────────────────────────────┘
                         │
                         ▼
┌──────────────────────────────────────────────────┐        S105
│         EXECUTE PREDETERMINED PROCESS              │
└──────────────────────────────────────────────────┘
                         │
                         ▼
                    ┌─────────┐
                    │   END   │
                    └─────────┘
```

# Fig.3

INFORMATION PROCESSING APPARATUS — 201

INFORMATION GENERATION UNIT — 202

STRESS CALCULATION UNIT — 208

PROCESS EXECUTION UNIT — 203

FARMING INFORMATION GENERATION UNIT — 204

CALCULATION UNIT — 205

NECESSARY VOLUME CALCULATION UNIT — 206

INGESTION VOLUME CALCULATION UNIT — 207

INFORMATION STORAGE UNIT — 151

OBSERVATION INFORMATION — 152

FARMING INFORMATION — 153

WEATHER INFORMATION — 154

SOIL INFORMATION — 155

PLANT INFORMATION — 156

INFORMATION OBTAINMENT UNIT — 157

EP 3 570 246 A1

# Fig.4

```
        ┌─────────┐
        │  START  │
        └─────────┘
             │
             ▼
┌──────────────────────────────────────┐         S201
│      GENERATE FARMING SCHEDULE       │
└──────────────────────────────────────┘
             │
             ▼
┌──────────────────────────────────────┐         S202
│    CALCULATE INGESTION RESOURCE VOLUME │
└──────────────────────────────────────┘
             │
             ▼
┌──────────────────────────────────────┐         S203
│  CALCULATE RESOURCE VOLUME NECESSARY FOR GROWING │
│              TARGET CROP              │
└──────────────────────────────────────┘
             │
             ▼
┌──────────────────────────────────────┐         S204
│    CALCULATE STRESS VOLUME OF TARGET CROP │
└──────────────────────────────────────┘
             │
             ▼
┌──────────────────────────────────────┐         S205
│        SELECT FARMING SCHEDULE       │
└──────────────────────────────────────┘
             │
             ▼
┌──────────────────────────────────────┐         S206
│ GENERATE INFORMATION REPRESENTING SUITABILITY DEGREE │
│         OF FARMING TO TARGET CROP    │
└──────────────────────────────────────┘
             │
             ▼
┌──────────────────────────────────────┐         S207
│      EXECUTE PREDETERMINED PROCESS   │
└──────────────────────────────────────┘
             │
             ▼
        ┌─────────┐
        │   END   │
        └─────────┘
```

Fig.5

EP 3 570 246 A1

# Fig.6

```
                    ┌─────────┐
                    │  START  │
                    └─────────┘
                         │
                         ▼
┌──────────────────────────────────────────────────────┐        S300
│        GENERATE SECOND FARMING INFORMATION             │
└──────────────────────────────────────────────────────┘
                         │
                         ▼
┌──────────────────────────────────────────────────────┐        S301
│    GENERATE INFORMATION REPRESENTING SUITABILITY DEGREE│
│              OF FARMING TO TARGET CROP                  │
└──────────────────────────────────────────────────────┘
                         │
                         ▼
┌──────────────────────────────────────────────────────┐        S302
│   STORE GENERATED INFORMATION IN INFORMATION STORAGE UNIT│
└──────────────────────────────────────────────────────┘
                         │
                         ▼
┌──────────────────────────────────────────────────────┐        S303
│            EXECUTE PREDETERMINED PROCESS               │
└──────────────────────────────────────────────────────┘
                         │
                         ▼
┌──────────────────────────────────────────────────────┐        S304
│   UPDATE INFORMATION STORED IN INFORMATION STORAGE UNIT│
└──────────────────────────────────────────────────────┘
                         │
                         ▼
┌──────────────────────────────────────────────────────┐        S305
│    GENERATE INFORMATION REPRESENTING SUITABILITY DEGREE│
│              OF FARMING TO TARGET CROP                  │
└──────────────────────────────────────────────────────┘
                         │
                         ▼
┌──────────────────────────────────────────────────────┐        S306
│            CALCULATE IMPROVEMENT DEGREE                │
└──────────────────────────────────────────────────────┘
                         │
                         ▼
┌──────────────────────────────────────────────────────┐        S307
│            EXECUTE PREDETERMINED PROCESS               │
└──────────────────────────────────────────────────────┘
                         │
                         ▼
                    ┌─────────┐
                    │   END   │
                    └─────────┘
```

# Fig.7

INFORMATION PROCESSING APPARATUS — 401

CALCULATION UNIT — 402

INFORMATION GENERATION UNIT — 403

INFORMATION STORAGE UNIT — 151

# Fig.8

START

CALCULATE INGESTION RESOURCE VOLUME — S401

GENERATE RISK INFORMATION REPRESENTING A DECREASE DEGREE OF YIELD — S402

END

22

# Fig.9

## INTERNATIONAL SEARCH REPORT

| International application No. |
| --- |
| PCT/JP20107/046827 |

**A. CLASSIFICATION OF SUBJECT MATTER**
Int.Cl. G06Q50/02(2012.01)i, A01G7/00(2006.01)i

According to International Patent Classification (IPC) or to both national classification and IPC

**B. FIELDS SEARCHED**

Minimum documentation searched (classification system followed by classification symbols)
Int.Cl. G06Q10/00-99/00, A01G7/00

| Documentation searched other than minimum documentation to the extent that such documents are included in the fields searched | |
| --- | --- |
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 11-313594 A (OMRON CORP.) 16 November 1999, paragraphs [0018]-[0037], [0041]-[0054] (Family: none) | 1, 9-10 |
| Y | | 2-8 |
| Y | JP 2014-048889 A (TOKO ELECTRIC CORP.) 17 March 2014, paragraphs [0023]-[0026], [0031], [0063]-[0070] (Family: none) | 2-8 |
| Y | JP 2013-172698 A (NTT FACILITIES, INC.) 05 September 2013, paragraphs [0022]-[0026], [0030], [0036]-[0038], [0047]-[0068], [0073]-[0080], [0085]-[0108] (Family: none) | 3-8 |
| Y | JP 10-056882 A (SUOMEN REHU OY) 03 March 1998, paragraphs [0002]-[0005], [0010], [0014]-[0023] & US 6205707 B1, column 1, line 23 to column 2, line 3, column 2, lines 25-64, column 3, line 20 to column 5, line 2 & EP 813807 A1 & FI 962537 A | 5 |
| Y | JP 2014-103889 A (MIRAIZOU CO., LTD.) 09 June 2014, paragraphs [0006]-[0007], [0017]-[0035] (Family: none) | 5 |

☐ Further documents are listed in the continuation of Box C.   ☐ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 12 March 2018 (12.03.2018) | 27 March 2018 (27.03.2018) |

| Name and mailing address of the ISA/ | Authorized officer |
| --- | --- |
| Japan Patent Office 3-4-3, Kasumigaseki, Chiyoda-ku, Tokyo 100-8915, Japan | Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 1999H11511581 B
- JP 2002259708 A
- JP 2015225498 A
- US 20130332205
- JP 2017001790 A